# EUROPÄISCHE PATENTSCHRIFT

(11) **EP 3 658 419 B1**
(45) Veröffentlichungstag und Bekanntmachung des Hinweises auf die Patenterteilung: **22.09.2021**
(21) Anmeldenummer: 18732303.5
(22) Anmeldetag: 13.06.2018
(51) Int. Cl.: B60R 19/26

(54) **FUSSGÄNGERSCHUTZVORRICHTUNG FÜR EIN FAHRZEUG**
PEDESTRIAN PROTECTION DEVICE FOR A VEHICLE
DISPOSITIF DE PROTECTION DES PIÉTONS POUR UN VÉHICULE

(30) Priorität: 22.07.2017 DE 102017006977
(43) Veröffentlichungstag der Anmeldung: 03.06.2020
(73) Patentinhaber: Audi AG, 85045 Ingolstadt (DE)
(72) Erfinder: EBNER, Anca, 85092 Kösching (DE); STAACK, Holger, 80804 München (DE)
(86) Internationale Anmeldenummer: PCT/EP2018/065690
(87) Internationale Veröffentlichungsnummer: WO 2019/020268

(56) Entgegenhaltungen:
- EP-A1- 1 386 794
- DE-A1-102011 081 772
- JP-A- 2015 174 548

## Beschreibung

Die Erfindung betrifft eine Fußgängerschutzvorrichtung für ein Fahrzeug.

In Fahrzeugen werden frontseitig und heckseitig Stoßfängeranordnungen eingesetzt, um in Fällen eines Fahrzeug- oder Fußgängeraufpralls die Aufprallenergie abzubauen oder die Anprallkinematik zu beeinflussen. Solche Stoßfängeranordnungen sollten daher in der Lage sein, neben der Absorption von hohen Energien bei einem Fahrzeugaufprall auch einen wirksamen Fußgängerschutz sicherzustellen. Für eine Fußgängerschutz-Funktion wird ein deformierbares Stoßfängersystem benötigt. Hierfür ist es bekannt, dies entweder durch eine plastische Deformation oder durch eine von gezieltem Versagen gefolgte weitgehende elastische Deformation zu erreichen.

Sowohl eine plastische Deformation als auch ein Versagen der an der Fußgängerschutz-Funktion beteiligten Bauteile sind irreversibel und schränken daher deren Funktion dauerhaft ein. Häufig kommt es hierzu zu Zielkonflikten hinsichtlich eines möglichst geringen Typschadens bei der versicherungsrechtlichen Bestimmung der Typklasse eines Fahrzeugs. Mögliche Folgen sind ungünstige Versicherungseinstufungen der Fahrzeuge oder aufwändige und wenig robuste, d. h. auf Versagen ausgelegte Bauteile, die zu Mehrkosten führen können.

Die EP 1 386 794 A1 beschreibt eine Aufprallenergieübertragungsanordnung eines Fahrzeugs zum Übertragen von bei einem Zusammenprall mit einem Fußgänger freiwerdende Energie auf die Fahrzeugstruktur. Hierzu ist ein Hohlprofilabschnitt eines Karosserieelementes auf einem weiteren Karosserieelement verschiebbar angeordnet, wobei das Karosserieelement mit dem Hohlprofilabschnitt mit einer Rastfunktion ausgebildet ist. Diese Rastfunktion wird mittels quer zu einer Längsrichtung der beiden Karosserieelemente verschiebbaren und jeweils mittels eines Federelementes vorgespannten Keile realisiert. Wird das weitere Karosserieelement aufgrund eines Crashs in den Hohlprofilabschnitt gegen die Federkraft des Federelementes geschoben, übernimmt ein kegelstumpfförmiger Abschnitt die Führung der Keile, bis diese an einer Schulter des weiteren Karosserieelementes anstoßen und damit bei niedriger Geschwindigkeit des Fahrzeugs die Bewegung des weiteren Karosserieelementes beenden.

Aus der JP 2015 174 548 A ist eine Rahmenstruktur zur Absorption von Aufprallenergie bekannt, welche aus einer Mehrzahl von Rahmenelementen zusammengesetzt ist. Diese Rahmenelemente sind in einer axialen Richtung als kegelstumpfförmige Zylinder ausgeführt und sind zur Bildung der Rahmenstruktur jeweils in axialer Richtung randseitig übereinander geschoben. Hierbei sind im Verbindungsbereich der äußere Durchmesser und der innere Durchmesser der Rahmenelemente derart aufeinander abgestimmt, dass die äußere Kante der Stirnfläche des Rahmenelementes mit dem kleineren äußeren Durchmesser linienförmig an der Innenfläche des Rahmenelementes mit dem größeren Innendurchmesser anliegt und dort miteinander verbunden sind. So wird der Endabschnitt mit dem kleineren Durchmesser des Rahmenelementes mit dem Endabschnitt des den größeren Durchmesser aufweisenden Rahmenelementes verbunden, indem dieser Kontaktabschnitt bspw. verschweißt wird.

In der DE 102 11 972 A1 ist eine Leuchteneinheit für Fahrzeuge bekannt, mit welcher bei einem Aufprall eines Fußgängers gegen die Fahrzeugfront die Verletzungsgefahr minimiert wird. Dies wird bei dieser bekannten Leuchteneinheit durch eine frontseitige Scheibe erreicht, die unter Krafteinwirkung nachgiebig ist.

Aus der DE 10 2009 001 038 A1 ist eine Fahrzeugfronteinheit mit einem mittleren Trägerteil zur Aufnahme eines Kühlers und mit linken und rechten Scheinwerferträgern bekannt, an welchen jeweils eine Scheinwerfereinheit befestigt wird.

Schließlich zeigt die DE 10 2011 081 772 A1 eine Vorrichtung zum Befestigen eines Querträgers eines Fahrzeugs an dessen Längsträger. Diese Befestigungsvorrichtung besteht aus einem Aufnahmebauteil und einem Befestigungsbauteil, wobei der Querträger an dem Befestigungsbauteil befestigt und das Aufnahmebauteil über eine in ihrer Steifigkeit einstellbaren und mit einem Längsträger verbunden Vorrichtung angeordnet ist. Das Befestigungsbauteil weist einen kegelstumpfförmigen Abschnitt auf, welcher in einem konturangepassten Hohlraum angeordnet ist. Durch eine bei einer Kollision auf das Befestigungsbauteil wirkende Kollisionskraft wird der kegelstumpfförmige Abschnitt des Befestigungsbauteils aus dem kegelstumpfförmigen Hohlraum in einen sich daran anschließenden weiteren Hohlraum geschoben. Sobald das Befestigungsbauteil vollständig in das Aufnahmebauteil geschoben ist, wird die Befestigungsvorrichtung in Richtung der in seiner Steifigkeit einstellbaren Vorrichtung zum adaptiven Abbau von Kollisionsenergie bewegt.

Es ist Aufgabe der Erfindung eine Fußgängerschutzvorrichtung für ein Fahrzeug anzugeben, mit welchem Zielkonflikte hinsichtlich der Anforderungen an einen Fußgängerschutz, Typschaden-Anforderungen und Anforderungen aus dynamischen Betriebslasten minimiert werden.

Diese Aufgabe wird gelöst durch eine Fußgängerschutzvorrichtung mit den Merkmalen des Patentanspruchs 1, durch eine Fußgängerschutzvorrichtung mit den Merkmalen des Patentanspruchs 3 und durch eine Fußgängerschutzvorrichtung mit den Merkmalen des Patentanspruchs 6.

Eine solche Fußgängerschutzvorrichtung für ein Fahrzeug umfasst gemäß der erstgenannten Lösung:
- ein fahrzeugfest verbautes erstes Karosserieelement, welches einen Verbindungsabschnitt aufweist,
- ein mit einem Hohlprofilabschnitt mit wenigstens zwei beabstandeten Hohlprofilwänden ausgebildetes zweites Karosserieelement, wobei der Verbindungsabschnitt des ersten Karosserieelementes in dem Hohlprofilabschnitt verschiebbar angeordnet ist,
- ein elastisch deformierbares Außenanbauteil des Fahrzeugs, welches mit dem zweiten Karosserieelement verbunden ist, wobei eine aufgrund eines Krafteintrages auf das Außenanbauteil bewirkten Verschiebung des zweiten Karosserieelementes der Verbindungsabschnitt in den Hohlprofilabschnitt aus einer Ruheposition in eine Crashposition verschiebbar ist, und
- eine zum lösbaren Verrasten des Verbindungsabschnittes des ersten Karosserieelementes in der Crashposition mit dem Hohlprofilabschnitt ausgebildete Rasteinrichtung mit wenigstens einer an dem Verbindungsabschnitt angeordneten Rastnase und einem in dem Hohlprofilabschnitt angeordneten Rastvorsprung, wobei zur Bildung des Rastvorsprungs eine Hohlprofilwand einen den Abstand der beiden Hohlprofilwände vergrößernden Absatz aufweist, und die wenigstens eine Rastnase an dem Verbindungsabschnitt derart ausgebildet ist, dass mit dem Verschieben des ersten Karosserieelementes in die Crashposition die Rastnase von dem Absatz hintergreifbar ist.

Bei dieser erfindungsgemäßen Fußgängerschutzvorrichtung kommt es bei Auftreten eines Crashlastfalles, aufgrund bspw. eines Fußgängeraufpralls, zu einem Krafteintrag auf das zweite Karosserieelement, welches eine Relativverschiebung zwischen dem fahrzeugfest verbauten ersten Karosserieelement und dem zweiten Karosserieelement in die Crashposition bewirkt. Das erste und zweite Karosserieelement wird in dieser Crashposition mittels der Rasteinrichtung lösbar arretiert, so dass die Deformation eines mit dem zweiten Karosserieelement verbundenen Außenanbauteils, bspw. einer Stoßfängeraußenhaut erhalten bleibt. Da die mittels der Rasteinrichtung erfolgte Verrastung des Hohlprofilabschnittes des zweiten Karosserieelementes mit dem ersten Karosserieelement lösbar ist, ist diese Deformation reversibel und kann damit ohne Beschädigung der beteiligten Bauelemente durch eine elastische Rückfederung wieder rückgängig gemacht werden.

Weiterbildungsgemäß weist der Verbindungsabschnitt des ersten Karosserieelementes einen Anfangsabschnitt auf, mit welchem der Verbindungsabschnitt unter Bildung von dessen Ruheposition in den Hohlprofilabschnitt des zweiten Karosserieelementes ragt. Ein an den Anfangsabschnitt sich anschließender Rastabschnitt ist mit der wenigstens einen Rastnase ausgebildet.

Die Fußgängerschutzvorrichtung für ein Fahrzeug umfasst gemäß der zweitgenannten Lösung:
- ein fahrzeugfest verbautes erstes Karosserieelement, welches einen Verbindungsabschnitt aufweist,
- ein mit einem Hohlprofilabschnitt mit wenigstens zwei beabstandeten Hohlprofilwänden ausgebildetes zweites Karosserieelement, wobei der Verbindungsabschnitt des ersten Karosserieelementes in dem Hohlprofilabschnitt verschiebbar angeordnet ist,
- ein elastisch deformierbares Außenanbauteil des Fahrzeugs, welches mit dem zweiten Karosserieelement verbunden ist, wobei eine aufgrund eines Krafteintrages auf das Außenanbauteil bewirkten Verschiebung des zweiten Karosserieelementes der Verbindungsabschnitt in den Hohlprofilabschnitt aus einer Ruheposition in eine Crashposition verschiebbar ist, und
- eine zum lösbaren Verrasten des Verbindungsabschnittes des ersten Karosserieelementes in der Crashposition mit dem Hohlprofilabschnitt ausgebildete Rasteinrichtung mit wenigstens einer an dem Verbindungsabschnitt angeordneten und als Riffelung ausgebildeten Rastvorsprung und einer in dem Hohlprofilabschnitt angeordneten Rastnase, wobei eine Hohlprofilwand einen den Abstand der beiden Hohlprofilwände vergrößernden Absatz aufweist und der an den Absatz sich anschließende Hohlprofilwandabschnitt mit der wenigstens einen Rastnase ausgebildet ist und die Riffelung an dem Verbindungsabschnitt derart ausgebildet ist, dass mit dem Verschieben des ersten Karosserieelementes in die Crashposition die Rastnase mit der Riffelung verrastbar ist.

In einer Weiterbildung der Erfindung gemäß der zweitgenannten Lösung ist die Fußgängerschutzvorrichtung mit dieser alternativen Rasteinrichtung derart ausgebildet, dass
- der Verbindungsabschnitt einen Anfangsabschnitt aufweist, mit welchem der Verbindungsabschnitt unter Bildung von dessen Ruheposition in den Hohlprofilabschnitt ragt, und
- der Verbindungsabschnitt einen an den Anfangsabschnitt sich anschließenden Rastabschnitt mit der Riffelung aufweist.

Das Rückgängigmachen des in die Crashposition verschobenen Verbindungsabschnittes erfolgt weiterbildungsgemäß mittels eines Werkzeugs, mit welchem der Formschluss zwischen der Rastnase und dem Rastvorsprung gelöst wird.

Eine Fußgängerschutzvorrichtung für ein Fahrzeug umfasst gemäß der drittgenannten Lösung:
- ein fahrzeugfest verbautes erstes Karosserieelement, welches einen Verbindungsabschnitt aufweist,
- ein mit einem Hohlprofilabschnitt ausgebildetes zweites Karosserieelement, wobei der Verbindungsabschnitt des ersten Karosserieelementes in dem Hohlprofilabschnitt ragt und zwischen einer Ruheposition und einer Crashposition verschiebbar angeordnet ist,
- ein elastisch deformierbares Außenanbauteil des Fahrzeugs, welches mit dem zweiten Karosserieelement verbunden ist, wobei eine aufgrund eines Krafteintrages auf das Außenanbauteil bewirkten Verschiebung des zweiten Karosserieelementes der Verbindungsabschnitt in den Hohlprofilabschnitt aus der Ruheposition in die Crashposition verschiebbar ist, und
- eine Konusverbindung zwischen dem Verbindungsabschnitt und dem Hohlprofilabschnitt, welche ausgebildet ist, bei einer Verschiebung des Verbindungsabschnittes in die Crashposition den Verbindungsabschnitt lösbar mit dem Hohlprofilabschnitt durch den von der Konusverbindung bewirkten Reibschluss zu verbinden.

Auch bei dieser erfindungsgemäßen Fußgängerschutzvorrichtung kommt es bei Auftreten eines Crashlastfalles, aufgrund bspw. eines Fußgängeraufpralls, zu einem Krafteintrag auf das zweite Karosserieelement, welches eine Relativverschiebung zwischen dem fahrzeugfest verbauten ersten Karosserieelement und dem zweiten Karosserieelement in die Crashposition bewirkt. Die Crashposition wird hierbei durch eine Konusverbindung in Abhängigkeit der Größe des Krafteintrages auf das zweite Karosserieelement bestimmt. Dadurch wird das zweite Karosserieelement in dieser Crashposition lösbar arretiert, so dass die Deformation eines mit dem zweiten Karosserieelement verbundenen Außenanbauteils, bspw. eine Stoßfängeraußenhaut erhalten bleibt. Da die mittels der Konusverbindung erfolgte Arretierung des Hohlprofilabschnittes des zweiten Karosserieelementes mit dem Verbindungsabschnitt des ersten Karosserieelementes in der Crashposition lösbar ist, ist diese Deformation reversibel und kann damit ohne Beschädigung der beteiligten Bauelemente durch eine elastische Rückfederung wieder rückgängig gemacht werden. Die Konusverbindung kann durch eine entgegen der Richtung des Krafteintrages erzeugte Kraft auf das zweite Karosserieelement gelöst werden.

Das zweite Karosserieelement ist mit einem Außenanbauteil des Fahrzeugs verbunden, mit welchem in einem Crashlastfall der Krafteintrag auf das zweite Karosserieelement übertragbar ist. Bei einem durch einen Fußgängeraufprall auf ein solches Außenanbauteil, das bspw. als Stoßfängeraußenhaut am Vorbau eines Fahrzeugs ausgebildet ist, wird eine temporäre, also lösbare Deformation dieses Außenanbauteils mittels der Verrastung zwischen dem ersten und dem zweiten Karosserieelement erreicht. Bei einem durch einen Fußgänger ausgelösten Crashlast kann so trotz harter oder auch hochelastischer Struktur, die durch das erste und zweite Karosserieelement zumindest teilweise gebildet wird, eine gewünschte Fahrzeugaußenkontur reversibel eingestellt werden.

Eine vorteilhafte Weiterbildung der Erfindung gemäß der drittgenannten Lösung sieht vor, dass der Verbindungsabschnitt des ersten Karosserieelementes Konus verjüngend in Richtung seines Endes ausgebildet ist und der Hohlprofilabschnitt des zweiten Karosserieelementes an die Konusform des Verbindungsabschnittes angepasst ist.

Die Erfindung wird nachfolgend anhand von Ausführungsbeispielen unter Bezugnahme auf die beigefügten Figuren ausführlich beschrieben. Es zeigen:
- Figur 1: eine schematische Darstellung einer Fußgängerschutzvorrichtung als Ausführungsbeispiel der Erfindung in einem Ruhezustand,
- Figur 2: eine schematische Darstellung der Fußgängerschutzvorrichtung nach Figur 1 in einem aktivierten Zustand,
- Figur 3: eine schematische Darstellung der Fußgängerschutzvorrichtung nach Figur 1 in einem weiteren aktivierten Zustand,
- Figur 4: eine schematische Darstellung einer Fußgängerschutzvorrichtung als weiteres Ausführungsbeispiel der Erfindung in einem Ruhezustand,
- Figur 5: eine schematische Darstellung einer Fußgängerschutzvorrichtung als weiteres Ausführungsbeispiel der Erfindung in einem Ruhezustand, und
- Figur 6: eine schematische Darstellung der Fußgängerschutzvorrichtung nach Figur 5 in einem aktivierten Zustand.

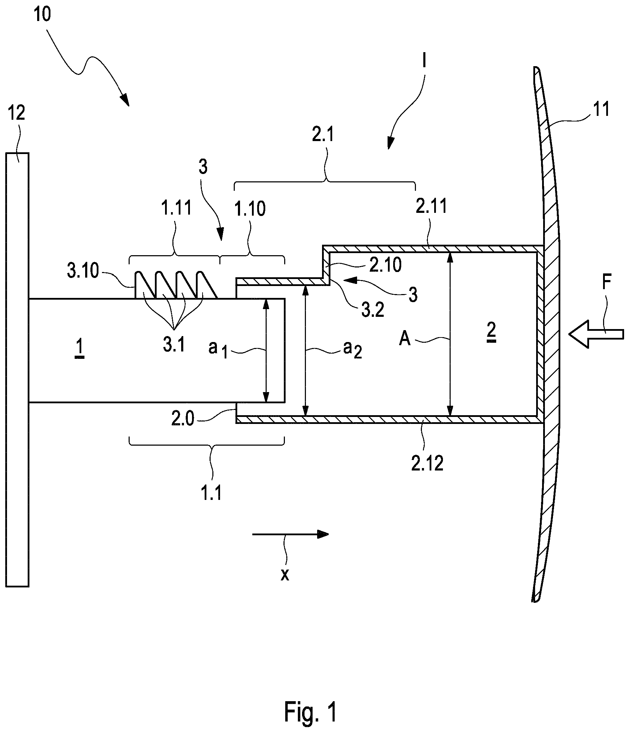

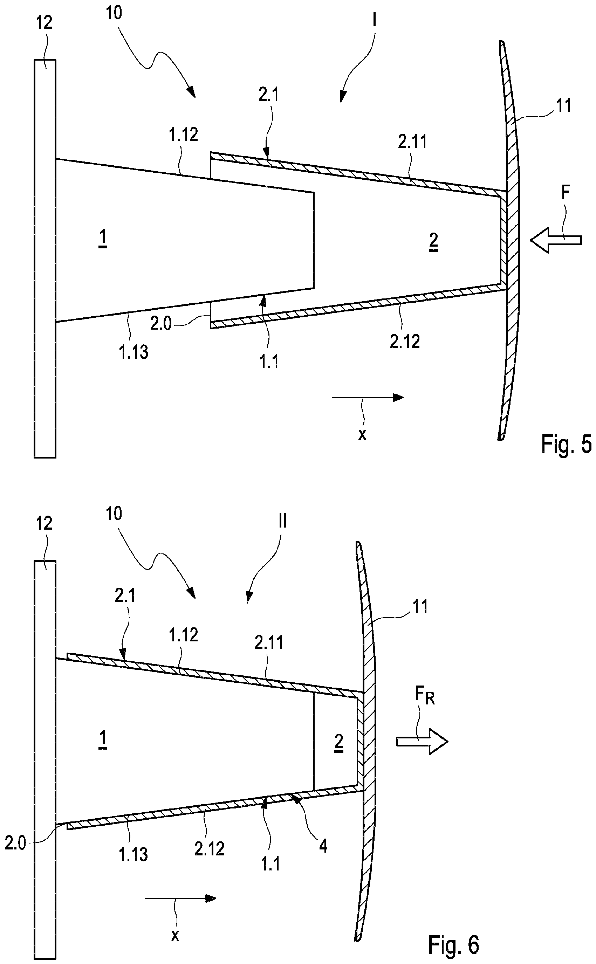

Die Fußgängerschutzvorrichtung 10 eines Fahrzeugs gemäß den Figuren 1 bis 6 dient dazu, bei einem Aufprall eines Fußgängers, Radfahrers oder Mopedfahrers (FGS-Crashfall) auf das Fahrzeug, insbesondere auf dessen Stoßfängerüberzug (in den Figuren 1 bis 3 schematisch mit dem Bezugszeichen 11 dargestellt) die Verletzungsgefahr zu vermeiden, zumindest jedoch zu minimieren. Hierzu wird eine reversible, d. h. eine temporäre Deformation des Stoßfängerüberzuges zugelassen, indem eine Relativverschiebung zwischen einem ersten und einem zweiten Karosserieelement zugelassen und diese beiden Karosserieelemente im Deformationszustand mittels einer lösbaren Rasteinrichtung (Figuren 1 bis 4) verrastet oder mittels einer Konusverbindung (Figuren 5 und 6) arretiert werden. Nach dem Lösen dieser Rasteinrichtung bzw. der Konusverbindung wird die Deformation rückgängig gemacht.

Die Fußgängerschutzvorrichtung 10 umfasst nach Figur 1 ein erstes Karosserieelement 1, welches mit einer fahrzeugfesten Struktur, nämlich einem Vorderwagen 12 des Fahrzeugs verbunden ist. Dieser Vorderwagen 12 ist in Figur 1 nur schematisch angedeutet.

Dieses erste Karosserieelement 1 weist einen Verbindungsabschnitt 1.1 auf, welcher endseitig ausgehend einen Anfangsabschnitt 1.10 und einen sich daran anschließenden Rastabschnitt 1.11 mit mehreren Rasthaken 3.1 einer Rasteinrichtung 3 aufweist. Dieses erste Karosserieelement 1 kann bspw. einen Scheinwerferarm zur Aufnahme eines Hauptscheinwerfers des Fahrzeugs darstellen.

Dieses fahrzeugfest verbaute erste Karosserieelement 1 ragt mit dessen Anfangsabschnitt 1.10 in eine Öffnung 2.0 eines Hohlprofilabschnittes 2.1 eines zweiten Karosserieelementes 2, welches seinerseits mit einem frontseitigen Ende mit einem Außenanbauteil 11 des Fahrzeugs verbunden ist. Dieses Außenanbauteil 11 stellt bspw. einen Stoßfängerüberzug eines Stoßfängers dar. Damit ist das zweite Karosserieelement 2 stoßfängerfest in dem Fahrzeug montiert.

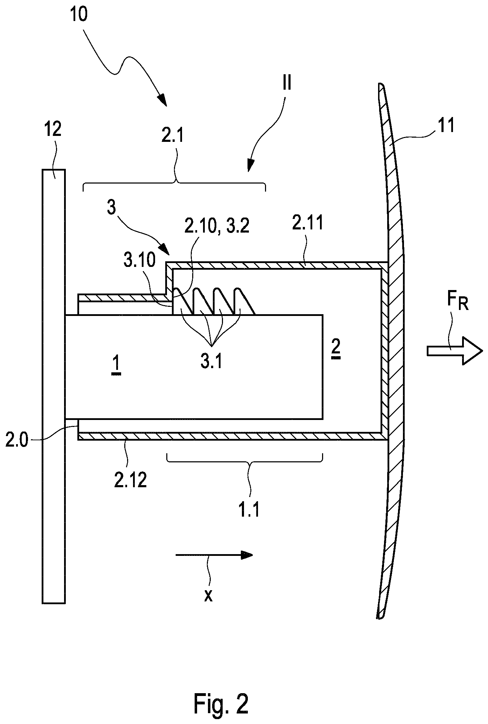

Dieses Außenanbauteil 11 ist elastisch deformierbar, so dass ein im FGS-Crashfall auf das Außenanbauteil 11 erzeugter Krafteintrag F eine Änderung einer Ruheposition I (vgl. Figur 1) des Verbindungsabschnittes 1.1 des ersten Bauteils 1 relativ zum zweiten Karosserieelement 2 in eine Crashposition II gemäß Figur 2 bewirkt wird, indem das erste Karosseriebauteil 1 mittels dessen Verbindungsabschnittes 1.1 über die Öffnung 2.0 weiter in den Hohlprofilabschnitt 2.1 des zweiten Karosserieelementes 2 geschoben wird.

In dieser in Figur 2 dargestellten Crashposition II erfolgt mittels der Rasteinrichtung 3 eine Verrastung des Verbindungsabschnittes 1.1 mit dem Hohlprofilabschnitt 2.1. Die Rasteinrichtung 3 umfasst die an dem Rastabschnitt 1.11 des Verbindungsabschnittes 1.1 angeordneten Rastnasen 3.1 und einen in dem Hohlprofilabschnitt 2.1 realisierten Rastvorsprung 3.2. Aufgrund der elastischen Deformation des Außenanbauteils 11 entsteht eine Rückstellkraft F_{R}, mit welcher die Deformation rückgängig gemacht werden kann.

Der Hohlprofilabschnitt 2.1 des zweiten Karosserieelementes 2 wird zumindest von zwei beabstandeten Hohlprofilwänden 2.11 und 2.12 gebildet, wobei zur Bildung des Rastvorsprungs 3.2 der Rasteinrichtung 3 die Hohlprofilwand 2.11 einen den Abstand der beiden Hohlprofilwände 2.11 und 2.12 vergrößernden Absatz 2.10 aufweist. Der Abstand der beiden Hohlprofilwände 2.11 und 2.12 wird damit von einem Abstand a₂ im Bereich der Öffnung 2.0 auf einen Abstand A vergrößert. Gemäß Figur 1 weist der in die Öffnung 2.0 eingeführte Anfangsabschnitt 1.10 sowie der sich daran anschließende Rastabschnitt 1.11 eine in Richtung der beiden Hohlprofilwänden 2.11 und 2.12 gemessene Weite a₁ auf, die kleiner ist als der Abstand a₂ im Bereich der Öffnung 2.0 bis zu dem Absatz 2.10. Damit entsteht zwischen dem Anfangsabschnitt 1.10 sowohl zu der Hohlprofilwand 2.11 als auch zu der Hohlprofilwand 2.12 ein definierter Abstand. Die relative Position zwischen dem ersten Karosserieelement 1 und dem zweiten Karosserieelement 2 ist dennoch aufgrund der Anbindung an die Struktur des Vorderwagens 12 bzw. an das Außenanbauteil 11 eindeutig definiert.

Wie oben bereits beschrieben, wird bei einem Krafteintrag F auf das Anbauteil 11 das zweite Karosserieelement 2 mittels dessen Hohlprofilabschnitt 2.1 auf den Verbindungsabschnitt 1.1 geschoben und dabei die beiden Hohlprofilwände 2.11 und 2.12 geringfügig aufgeweitet, so dass hierbei die Rastnasen 3.1 von dem Absatz 2.10 als Rastvorsprung 3.2 der Rasteinrichtung 3 überfahren werden bis die entgegen der Fahrtrichtung (x-Richtung) gesehene rückseitige Rastnase 3.10 von dem Absatz 2.10 hintergriffen wird, wie dies in Figur 2 dargestellt ist. Beim Überfahren der Rastnasen 3.1 werden diese geringfügig von der Hohlprofilwand 2.11 plastisch deformiert, während der Hohlprofilabschnitt 2.1 durch den Krafteintrag F und durch die Rastnasen 3.1 geringfügig aufgedrückt wird. Damit wird über den Absatz 2.10 und diese Rastnase 3.10 ein Formschluss zwischen dem ersten und zweiten Karosserieelement 1 bzw. 2 hergestellt, mit welcher die Deformation des Anbauteils 11 arretiert wird.

Diese mittels der Rasteinrichtung 3 realisierte Verrastung des ersten Karosserieelementes 1 mit dem zweiten Karosserieelement 2 in der Crashposition II kann mittels eines Werkzeugs gelöst werden, indem die Öffnung 2.0 durch Abstützung an dem Verbindungsabschnitt 1.1 des ersten Karosserieelementes 1 aufgeweitet wird, wodurch aufgrund der von dem Außenanbauteil 11 erzeugten Rückstellkraft F_{R} die Rastnasen 3.1 in Fahrtrichtung (x-Richtung) von dem Absatz 2.10 überfahrbar sind und damit wieder die Ruheposition I gemäß Figur 1 hergestellt ist.

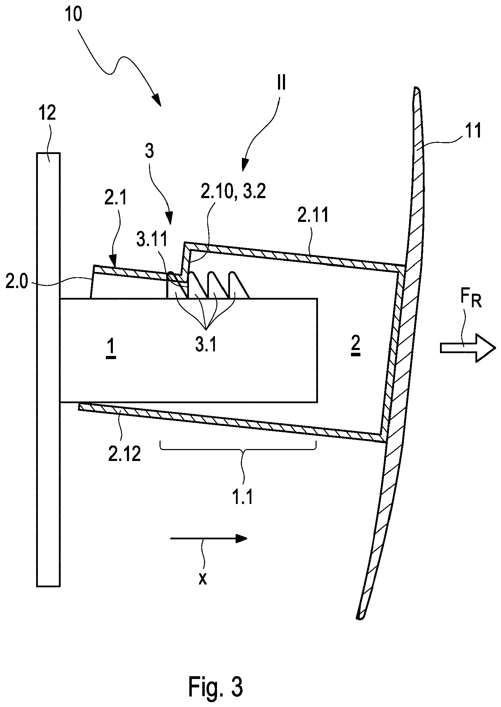

Die Figur 2 zeigt eine Crashposition II des zweiten Karosserieelementes 2, in welcher der Verbindungsabschnitt 1.1 des ersten Karosserieelementes 1 vollständig in den Hohlprofilabschnitt 2.1 über die Öffnung 2.0 eingefahren ist. Nun ist es auch möglich, dass bei einem geringeren Krafteintrag F das erste Karosserieelement 1 eine Crashposition II einnimmt, bei welcher im Vergleich zu derjenigen Crashposition II gemäß Figur 2 der Verbindungsabschnitt 1.1 des ersten Karosserieelementes 1 nicht so weit in den Hohlprofilabschnitt 2.1 eingefahren ist. Diesen Zustand zeigt die Figur 3 mit einer Crashposition II, bei welcher der Verbindungsabschnitt 1.1 des ersten Karosserieelementes 1 in den Hohlprofilabschnitt 2.1 nur soweit eingefahren ist, dass der Absatz 2.10 als Rastvorsprung 3.2 des zweiten Karosserieelementes 2 die gegen die Fahrtrichtung (x-Richtung) gesehene zweitletzte Rastnase 3.11 hintergreift und damit auch dessen Deformationszustand arretiert. Beim Überfahren werden die Rastnasen 3.1 plastisch deformiert.

Aufgrund der kleineren Weite a₁ des Verbindungsabschnittes 1.1 im Vergleich zu dem Abstand a₂ der beiden Hohlprofilwände 2.11 und 2.12 ist es auch möglich, dass das zweite Karosserieelement 2 zusammen mit dem Außenanbauteil 11 aufgrund des Krafteintrages F gegenüber dem ersten Karosserieelement 1 verkippt wird.

Um eine plastische Verformung der Rastnasen 3.1 zu ermöglichen, bestehen diese aus einem Kunststoffmaterial, vorteilhafterweise ist das erste Karosserieelement 1 vollständig aus Kunststoffmaterial hergestellt.

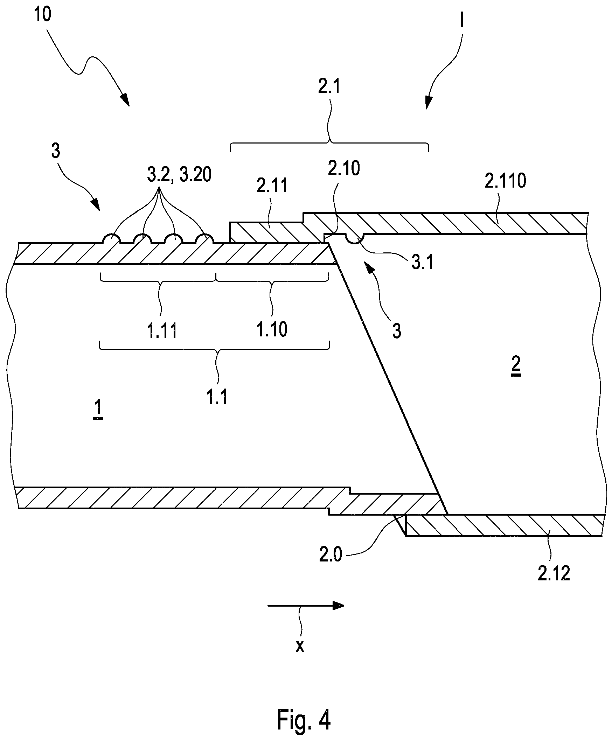

Die Figur 4 zeigt eine Fußgängerschutzvorrichtung 10 eines Fahrzeugs mit einem ersten Karosserieelement 1 und einem zweiten Karosserieelement 2, wobei jedoch ein mit dem Karosserieelement 1 verbundener Vorderwagen des Fahrzeugs und ein mit dem zweiten Karosserieelement 2 verbundenes Außenanbauteil des Fahrzeugs entsprechend den Figuren 1 bis 3 in dieser Figur 4 nicht dargestellt sind.

Der Unterschied zu den Fußgängerschutzvorrichtungen 10 gemäß den Figuren 1 bis 3 besteht darin, dass eine Rastnase 3.1 der Rasteinrichtung 3 nicht an dem Verbindungsabschnitt 1.1 des ersten Karosserieelementes 1, sondern in dem Hohlprofilabschnitt 2.1 des zweiten Karosserieelementes 2 angeordnet ist.

Nach Figur 4 weist das erste Karosserieelement 1 einen Verbindungsabschnitt 1.1 auf, welcher frontseitig ausgehend einen Anfangsabschnitt 1.10 sowie einen an diesen Anfangsabschnitt 1.10 anschließenden Rastabschnitt aufweist. Dieser Rastabschnitt 1.11 ist mit einem als Riffelung 3.20 ausgebildeten Rastvorsprung 3.2 der Rasteinrichtung 3 ausgebildet, welcher in der Crashposition II des ersten Karosserieelementes 1 mit der in dem Hohlprofilabschnitt 2.1 angeordneten Rastnase 3.1 der Rasteinrichtung 3 verrastet wird.

Entsprechend der Darstellung nach Figur 4 ist der Verbindungsabschnitt 1.1 in seiner Ruheposition I mit dessen Anfangsabschnitt 1.10 in eine von zwei beabstandet angeordneten Hohlprofilwänden 2.11 und 2.12 gebildeten Öffnung 2.0 eingeschoben. Die Hohlprofilwand 2.11 weist einen den Abstand der beiden Hohlprofilwände 2.11 und 2.12 vergrößernden Absatz 2.10 auf, an den sich ein Hohlprofilwandabschnitt 2.110 mit der Rastnase 3.1 anschließt.

In der Ruheposition I gemäß Figur 4 ist der Anfangsabschnitt 1.10 nur bis zu diesem Absatz 2.10 über die Öffnung 2.0 in den Hohlprofilabschnitt 2.1 eingeschoben. Bei einem aufgrund eines FGS-Crashfalls auf das zweite Karosserieelement 2 einwirkenden Krafteintrag wird der Verbindungsabschnitt 1.1 des ersten Karosserieelementes 1 aus der Ruheposition I soweit über die Öffnung 2.0 in den Hohlprofilabschnitt 2.1 geschoben, bis die Rastnase 3.1 in Eingriff mit der Riffelung 3.20 kommt und dadurch eine Crashposition II definiert wird. Die beiden Karosserieelemente 1 und 2 sind damit in dieser Crashposition II mittels der Rasteinrichtung 3 arretiert.

Der Hohlprofilabschnitt 2.1 muss hierbei derart elastisch sein, dass dieser durch den einwirkenden Krafteintrag im Bereich der Riffelung 3.2 aufgedrückt wird. Hierbei sind die verwendeten Werkstoffe in ihrer Steifigkeit und Festigkeit derart ausgelegt, dass die Riffelung 3.2 beim Einfahren des Verbindungsabschnittes 1.1 in den Hohlprofilabschnitt 2.1 nicht irreversibel deformiert wird.

Die mittels der Rasteinrichtung 3 realisierte Verrastung der beiden Karosserieelemente 1 und 2 kann auch wieder gelöst werden, indem mittels eines Werkzeugs die beiden Hohlprofilwände 2.11 und 2.12 im Bereich der Öffnung 2.0 unter Abstützung an dem Verbindungsabschnitt 1.1 geringfügig aufgeweitet werden, wodurch aufgrund der elastischen Rückstellkraft, welche durch das deformierbare Außenanbauteil erzeugt wird, der Verbindungsabschnitt 1.1 in Bezug auf den Hohlprofilabschnitt 2.1 wieder zurück in seine Ruheposition I verschoben wird. Hierfür weist der Hohlprofilabschnitt eine solche Elastizität auf, dass eine reversible Formrückstellung ermöglicht wird.

Die Figuren 5 und 6 zeigen eine Fußgängerschutzvorrichtung 10 für ein Fahrzeug, bei welcher die elastische Deformation eines Außenanbauteils 11 des Fahrzeugs nicht entsprechend den Fußgängerschutzvorrichtungen 10 gemäß den Figuren 1 bis 4 mittels einer Rasteinrichtung 3, sondern mittels einer Konusverbindung 4 temporär arretiert wird.

Diese Fußgängerschutzvorrichtung 10 gemäß den Figuren 5 und 6 umfasst ein erstes Karosserieelement 1 mit einem Verbindungsabschnitt 1.1, wobei dieses erste Karosserieelement 1 mit einer fahrzeugfesten Struktur, nämlich einem Vorderwagen 12 des Fahrzeugs verbunden ist. Dieser Vorderwagen 12 ist in den Figuren 5 und 6 nur schematisch angedeutet.

Dieses fahrzeugfest verbaute erste Karosserieelement 1 ragt gemäß Figur 5 in dessen Ruheposition I mit dessen Verbindungsabschnitt 1.1 in eine Öffnung 2.0 eines Hohlprofilabschnittes 2.1 eines zweiten Karosserieelementes 2, welches seinerseits mit einem frontseitigen Ende mit einem Außenanbauteil 11 des Fahrzeugs verbunden ist. Dieses Außenanbauteil 11 stellt bspw. einen Stoßfängerüberzug eines Stoßfängers dar. Damit ist das zweite Karosserieelement 2 stoßfängerfest in dem Fahrzeug montiert.

Der Hohlprofilabschnitt 2.1 des zweiten Karosserieelementes 2 ist mit mindestens zwei beabstandet zueinander angeordneten Hohlprofilwänden 2.11 und 2.12 ausgeführt, die zur Bildung der Konusverbindung 4 mit dem Verbindungsabschnitt 1.1 des ersten Karosserieelementes in Fahrtrichtung (x-Richtung) konusförmig verjüngend ausgerichtet sind. Diese Konusform übernehmend sind auch Außenwände 1.12 und 1.13 des Verbindungsabschnittes 1.1 in dessen Ruheposition I beabstandet und parallel zu diesen Hohlprofilwänden 2.11 und 2.12 ausgerichtet, so dass ein im FGS-Crashfall auf das Außenanbauteil 11 erzeugter Krafteintrag F zum Verschieben des Verbindungsabschnittes 1.1 des ersten Bauteils 1 aus einer Ruheposition I (vgl. Figur 5) in eine Crashposition II gemäß Figur 6 führt, indem das erste Karosseriebauteil 1 mittels dessen Verbindungsabschnittes 1.1 über die Öffnung 2.0 weiter in den Hohlprofilabschnitt 2.1 des zweiten Karosserieelementes 2 geschoben wird, bis durch einen zwischen den Außenwänden 1.12 und 1.13 des Verbindungsabschnittes 1.1 und den Hohlprofilwänden 2.11 und 2.12 des Hohlprofilabschnittes 2.1 entstehenden Reibschluss die Relativbewegung zwischen dem Verbindungsabschnitt 1.1 und dem Hohlprofilabschnitt 2.1 beendet und damit die Konusverbindung 4 in der dadurch definierten Crashposition II hergestellt ist.

Diese mittels der Konusverbindung 4 realisierte Verbindung des ersten Karosserieelementes 1 mit dem zweiten Karosserieelement 2 in der Crashposition II kann mittels eines Werkzeugs gelöst werden, indem der Hohlprofilabschnitt 2.1 des zweiten Karosserieelementes 2 mit einer die elastische Rückstellkraft F_{R} in Fahrtrichtung (x-Richtung) unterstützenden Kraft von dem Verbindungsabschnitt 1.1 des ersten Karosserieelementes 1 abgezogen wird.

### Bezugszeichen

- 1: erstes Karosserieelement der Fußgängerschutzvorrichtung 10
- 1.1: Verbindungsabschnitt des ersten Karosserieelementes 1
- 1.10: Anfangsabschnitt des Verbindungsabschnittes 1.1
- 1.11: Rastabschnitt des Verbindungsabschnittes 1.1
- 1.12: Außenwand des Verbindungsabschnittes 1.1
- 1.13: Außenwand des Verbindungsabschnittes 1.1

- 2: zweites Karosserieelement der Fußgängerschutzvorrichtung 10
- 2.0: Öffnung des Hohlprofilabschnittes 2.1
- 2.1: Hohlprofilabschnitt des zweiten Karosserieelementes 2
- 2.10: Absatz der Hohlprofilwand 2.11
- 2.11: Hohlprofilwand des Hohlprofilabschnittes 2.1
- 2.110: Hohlprofilwandabschnitt des Hohlprofilabschnittes
- 2.12: Hohlprofilwand des Hohlprofilabschnittes 2.1

- 3: Rasteinrichtung der Fußgängerschutzvorrichtung 10
- 3.1: Rastnase der Rasteinrichtung 3
- 3.10: Rastnase der Rasteinrichtung 3
- 3.2: Rastvorsprung der Rasteinrichtung 3
- 3.20: Riffelung als Rastvorsprung 3.2

- 4: Konusverbindung der Fußgängerschutzvorrichtung 10

- 10: Fußgängerschutzvorrichtung eines Fahrzeugs
- 11: Außenanbauteil des Fahrzeugs
- 12: Struktur eines Vorderwagens des Fahrzeugs

- F: Krafteintrag
- F_{R}: Rückstellkraft

## Patentansprüche

1. Fußgängerschutzvorrichtung (10) eines Fahrzeugs, umfassend
- ein fahrzeugfest verbautes erstes Karosserieelement (1), welches einen Verbindungsabschnitt (1.1) aufweist,
- ein mit einem Hohlprofilabschnitt (2.1) mit wenigstens zwei beabstandeten Hohlprofilwänden (2.11, 2.12) ausgebildetes zweites Karosserieelement (2), wobei der Verbindungsabschnitt (1.1) des ersten Karosserieelementes (1) in dem Hohlprofilabschnitt (2.1) verschiebbar angeordnet ist,
- ein elastisch deformierbares Außenanbauteil (11) des Fahrzeugs,welches mit dem zweiten Karosserieelement (2) verbunden ist, wobei aufgrund eines Krafteintrages (F) auf das Außenanbauteil (11) der Hohlprofilabschnitt (2.1) auf dem Verbindungsabschnitt (1.1) aus der Ruheposition (I) in die Crashposition (II) verschiebbar ist, und
- eine zum lösbaren Verrasten des Verbindungsabschnittes (1.2) des ersten Karosserieelementes (1) in der Crashposition (II) mit dem Hohlprofilabschnitt (2.1) ausgebildete Rasteinrichtung (3) mit wenigstens einer an dem Verbindungsabschnitt (1.1) angeordneten Rastnase (3.1) und einem in dem Hohlprofilabschnitt (2.1) angeordneten Rastvorsprung (3.2), wobei zur Bildung des Rastvorsprungs (3.2) eine Hohlprofilwand (2.11) einen den Abstand der beiden Hohlprofilwände (2.11, 2.12) vergrößernden Absatz (2.10) aufweist, und die wenigstens eine Rastnase (3.1) an dem Verbindungsabschnitt (1.1) derart ausgebildet ist, dass mit dem Verschieben des ersten Karosserieelementes (1) in die Crashposition (II) die Rastnase (3.1) von dem Absatz (2.10) hintergreifbar ist.

2. Fußgängerschutzvorrichtung (10) nach Anspruch 1 bei welcher
- der Verbindungsabschnitt (1.1) einen Anfangsabschnitt (1.10) aufweist, mit welchem der Verbindungsabschnitt (1.1) unter Bildung von dessen Ruheposition (I) in den Hohlprofilabschnitt (2.1) ragt, und
- der Verbindungsabschnitt (1.1) einen an den Anfangsabschnitt (1.10) sich anschließenden Rastabschnitt (1.11) mit der wenigstens einen Rastnase (3.1) aufweist.

3. Fußgängerschutzvorrichtung (10) eines Fahrzeugs, umfassend
- ein fahrzeugfest verbautes erstes Karosserieelement (1), welches einen Verbindungsabschnitt (1.1) aufweist,
- ein mit einem Hohlprofilabschnitt (2.1) mit wenigstens zwei beabstandeten Hohlprofilwänden (2.11, 2.12) ausgebildetes zweites Karosserieelement (2), wobei der Verbindungsabschnitt (1.1) des ersten Karosserieelementes (1) in dem Hohlprofilabschnitt (2.1) verschiebbar angeordnet ist,
- ein elastisch deformierbares Außenanbauteil (11) des Fahrzeugs,welches mit dem zweiten Karosserieelement (2) verbunden ist, wobei aufgrund eines Krafteintrages (F) auf das Außenanbauteil (11) der Hohlprofilabschnitt (2.1) auf dem Verbindungsabschnitt (1.1) aus der Ruheposition (I) in die Crashposition (II) verschiebbar ist, und
- eine zum lösbaren Verrasten des Verbindungsabschnittes (1.2) des ersten Karosserieelementes (1) in der Crashposition (II) mit dem Hohlprofilabschnitt (2.1) ausgebildete Rasteinrichtung (3) mit wenigstens einer an dem Verbindungsabschnitt (1.1) angeordneten und als Riffelung (3.20) ausgebildeten Rastvorsprung (3.2) und einer in dem Hohlprofilabschnitt angeordneten Rastnase (3.1), wobei eine Hohlprofilwand (2.11) einen den Abstand der beiden Hohlprofilwände (2.11, 2.12) vergrößernden Absatz (2.10) aufweist und der an den Absatz (2.10) sich anschließende Hohlprofilwandabschnitt (2.110) mit der wenigstens einen Rastnase (3.1) ausgebildet ist und die Riffelung (3.20) an dem Verbindungsabschnitt (1.1) derart ausgebildet ist, dass mit dem Verschieben des ersten Karosserieelementes (1) in die Crashposition (II) die Rastnase (3.1) mit der Riffelung (3.20) verrastbar ist.

4. Fußgängerschutzvorrichtung (10) nach Anspruch 3, bei welcher
- der Verbindungsabschnitt (1.1) einen Anfangsabschnitt (1.10) aufweist, mit welchem der Verbindungsabschnitt (1.1) unter Bildung von dessen Ruheposition (I) in den Hohlprofilabschnitt (2.1) ragt, und
- der Verbindungsabschnitt (1.1) einen an den Anfangsabschnitt (1.10) sich anschließenden Rastabschnitt (1.11) mit der Riffelung (3.20) aufweist.

5. Fußgängerschutzvorrichtung (10) nach einem der vorhergehenden Ansprüche, bei welcher die Rasteinrichtung (3) ausgebildet ist, mittels eines Werkzeugs den Formschluss zwischen der wenigstens einen Rastnase (3.1) und dem Rastvorsprung (3.2) zu lösen.

6. Fußgängerschutzvorrichtung (10) für ein Fahrzeug, umfassend
- ein fahrzeugfest verbautes erstes Karosserieelement (1), welches einen Verbindungsabschnitt (1.1) aufweist,
- ein mit einem Hohlprofilabschnitt (2.1) ausgebildetes zweites Karosserieelement (2), wobei der Verbindungsabschnitt (1.1) des ersten Karosserieelementes (1) in den Hohlprofilabschnitt (2.1) ragt und zwischen einer Ruheposition (I) und einer Crashposition (II) verschiebbar angeordnet ist,
- ein elastisch deformierbares Außenanbauteil (11) des Fahrzeugs,welches mit dem zweiten Karosserieelement (2) verbunden ist, wobei aufgrund eines Krafteintrages (F) auf das Außenanbauteil (11) der Hohlprofilabschnitt (2.1) auf dem Verbindungsabschnitt (1.1) aus der Ruheposition (I) in die Crashposition (II) verschiebbar ist, und
- eine Konusverbindung (4) zwischen dem Verbindungsabschnitt (1.1) und dem Hohlprofilabschnitt (2.1), welche ausgebildet ist, bei einer Verschiebung des Verbindungsabschnittes (1.1) in die Crashposition (II) den Verbindungsabschnitt (1.1) lösbar mit dem Hohlprofilabschnitt (2.1) durch den von der Konusverbindung (4) bewirkten Reibschluss zu verbinden.

7. Fußgängerschutzvorrichtung (10) nach Anspruch 6, bei welcher zur Bildung der Konusverbindung (4)
- der Verbindungsabschnitt (1.1) des ersten Karosserieelementes (1) konusförmig verjüngend in Richtung seines Endes ausgebildet ist, und
- der Hohlprofilabschnitt (2.1) des zweiten Karosserieelementes (2) an die Konusform des Verbindungsabschnittes (1.1) angepasst ist.

## Claims

1. Pedestrian protection device (10) of a vehicle, comprising
- a first bodywork element (1) which is built into the vehicle and has a connecting section (1.1),
- a second bodywork element (2) designed with a hollow profile section (2.1) having at least two spaced hollow profile walls (2.11, 2.12), wherein the connecting section (1.1) of the first bodywork element (1) is movably arranged in the hollow profile section (2.1)
- an elastically deformable outer add-on part (11) of the vehicle, which is connected to the second bodywork element (2), wherein the hollow profile section (2.1) can be moved on the connecting section (1.1) from the idle position (I) into the crash position (II) by a force (F) applied to the outer add-on part (11), and
- a latching apparatus (3) designed to releasably latch the connecting section (1.2) of the first bodywork element (1) to the hollow profile section (2.1) in the crash position (II), the latching apparatus having at least one latching lug (3.1) arranged on the connecting section (1.1) and a latching projection (3.2) arranged in the hollow profile section (2.1), wherein, in order to form the latching projection (3.2), a hollow profile wall (2.11) has a shoulder (2.10) which increases the distance between the two hollow profile walls (2.11, 2.12), and the at least one latching lug (3.1) on the connecting section (1.1) is designed in such a way that the shoulder (2.10) can engage behind the latching lug (3.1) when the first bodywork element (1) is moved into the crash position (II).

2. Pedestrian protection device (10) according to claim 1, in which
- the connecting section (1.1) has an initial section (1.10) with which the connecting section (1.1) projects, so as to form its idle position (I), into the hollow profile section (2.1) and
- the connecting section (1.1) has a latching section (1.11) adjoining the initial section (1.10) and having the at least one latching lug (3.1).

3. Pedestrian protection device (10) of a vehicle, comprising
- a first bodywork element (1) which is built into the vehicle and has a connecting section (1.1),
- a second bodywork element (2) designed with a hollow profile section (2.1) having at least two spaced hollow profile walls (2.11, 2.12), wherein the connecting section (1.1) of the first bodywork element (1) is movably arranged in the hollow profile section (2.1),
- an elastically deformable outer add-on part (11) of the vehicle, which is connected to the second bodywork element (2), wherein the hollow profile section (2.1) can be moved on the connecting section (1.1) from the idle position (I) into the crash position (II) by a force (F) applied to the outer add-on part (11), and
- a latching apparatus (3) designed to releasably latch the connecting section (1.2) of the first bodywork element (1) to the hollow profile section (2.1) in the crash position (II), the latching apparatus having at least one latching projection (3.2) arranged on the connecting section (1.1) and designed as a corrugation (3.20), and having a latching lug (3.1) arranged in the hollow profile section, wherein a hollow profile wall (2.11) has a shoulder (2.10) which increases the distance between the two hollow profile walls (2.11, 2.12), and the hollow profile wall section (2.110) adjoining the shoulder (2.10) is formed with the at least one latching lug (3.1) and the corrugation (3.20) on the connecting section (1.1) is designed in such a way that, when the first body element (1) is moved into the crash position (II), the latching lug (3.1) can be latched to the corrugation (3.20).

4. Pedestrian protection device (10) according to claim 3, in which
- the connecting section (1.1) has an initial section (1.10) with which the connecting section (1.1) projects, so as to form its idle position (I), into the hollow profile section (2.1) and
- the connecting section (1.1) has a latching section (1.11) adjoining the initial section (1.10) and having the corrugation (3.20).

5. Pedestrian protection device (10) according to any of the preceding claims, in which the latching apparatus (3) is designed to release the form fit between the at least one latching lug (3.1) and the latching projection (3.2) by means of a tool.

6. Pedestrian protection device (10) for a vehicle, comprising
- a first bodywork element (1) which is built into the vehicle and has a connecting section (1.1),
- a second bodywork element (2) designed with a hollow profile section (2.1), wherein the connecting section (1.1) of the first bodywork element (1) projects into the hollow profile section (2.1) and is movably arranged between an idle position (I) and a crash position (II),
- an elastically deformable outer add-on part (11) of the vehicle, which is connected to the second bodywork element (2), wherein the hollow profile section (2.1) can be moved on the connecting section (1.1) from the idle position (I) into the crash position (II) by a force (F) applied to the outer add-on part (11), and
- a conical connection (4) between the connecting section (1.1) and the hollow profile section (2.1), which conical connection is designed, when the connecting section (1.1) is moved into the crash position (II), to releasably connect the connecting section (1.1) to the hollow profile section (2.1) by means of the friction fit brought about by the conical connection (4).

7. Pedestrian protection device (10) according to claim 6, in which, in order to form the conical connection (4)
- the connecting section (1.1) of the first bodywork element (1) is conically tapered towards its end, and
- the hollow profile section (2.1) of the second bodywork element (2) is adapted to the conical shape of the connecting section (1.1).

## Revendications

1. Dispositif de protection des piétons (10) d'un véhicule, comprenant
- un premier élément de carrosserie (1) monté fixement sur le véhicule, et lequel présente une section de connexion (1.1),
- un second élément de carrosserie (2) réalisé avec une section de profilé creux (2.1) avec au moins deux parois de profilé creux (2.11, 2.12) espacées, dans lequel la section de connexion (1.1) du premier élément de carrosserie (1) est agencée de manière déplaçable dans la section de profilé creux (2.1)
- une pièce de fixation extérieure (11) du véhicule, déformable élastiquement, laquelle est connectée au second élément de carrosserie (2), dans lequel la section de profilé creux (2.1) peut être déplacée sur la section de connexion (1.1) de la position de repos (I) à la position de collision (II) à la suite de l'application d'une force (F) sur la pièce de fixation extérieure (11), et
- un appareil d'encliquetage (3) réalisé pour le blocage amovible de la section de connexion (1.2) du premier élément de carrosserie (1) dans la position de collision (II) avec la section de profilé creux (2.1), avec au moins un ergot d'encliquetage (3.1) agencé sur la section de connexion (1.1) et une saillie d'encliquetage (3.2) agencée dans la section de profilé creux (2.1), dans lequel, pour former la saillie d'encliquetage (3.2), une paroi de profilé creux (2.11) présente un épaulement (2.10) qui augmente la distance entre les deux parois de profilé creux (2.11, 2.12), et l'au moins un ergot d'encliquetage (3.1) sur la section de connexion (1.1) est réalisé de telle sorte que l'ergot d'encliquetage (3.1) peut venir en prise derrière l'épaulement (2.10) lorsque le premier élément de carrosserie (1) est déplacé dans la position de collision (II).

2. Dispositif de protection des piétons (10) selon la revendication 1, dans lequel
- la section de connexion (1.1) présente une section initiale (1.10) avec laquelle la section de connexion (1.1) fait saillie dans la section de profilé creux (2.1) pour former sa position de repos (I), et
- la section de connexion (1.1) présente une section d'encliquetage (1.11) adjacente à la section initiale (1.10) et présentant l'au moins un ergot d'encliquetage (3.1).

3. Dispositif de protection des piétons (10) d'un véhicule, comprenant
- un premier élément de carrosserie (1) monté fixement sur le véhicule, et lequel présente une section de connexion (1.1),
- un second élément de carrosserie (2) réalisé avec un profilé creux (2.1) avec au moins deux parois de profilé creux (2.11, 2.12) espacées, dans lequel la section de connexion (1.1) du premier élément de carrosserie (1) est agencée de manière déplaçable dans la section de profilé creux (2.1),
- une pièce de fixation extérieure (11) du véhicule, déformable élastiquement, laquelle est connectée au second élément de carrosserie (2), dans lequel la section de profilé creux (2.1) peut être déplacée sur la section de connexion (1.1) de la position de repos (I) à la position de collision (II) suite à l'application d'une force (F) sur la pièce de fixation extérieure (11), et
- un appareil d'encliquetage (3), réalisé pour l'encliquetage amovible de la section de connexion (1.2) du premier élément de carrosserie (1) dans la position de collision (II) avec la section de profilé creux (2.1), avec au moins une saillie d'encliquetage (3.2) agencée sur la section de connexion (1.1) et réalisée sous forme d'ondulation (3.20), et un ergot d'encliquetage (3.1) agencé dans la section de profilé creux, dans lequel une paroi de profilé creux (2.11) présente un épaulement (2.10) augmentant la distance entre les deux parois de profilé creux (2.11, 2.12) et la section de paroi de profilé creux (2.110) adjacente à l'épaulement (2.10) est réalisée avec le au moins un ergot d'encliquetage (3.1), et l'ondulation (3.20) sur la section de connexion (1.1) est réalisée de telle sorte que, lorsque le premier élément de carrosserie (1) est déplacé dans la position de collision (II), l'ergot d'encliquetage (3.1) peut être verrouillé sur l'ondulation (3.20).

4. Dispositif de protection des piétons (10) selon la revendication 3, dans lequel
- la section de connexion (1.1) présente une section initiale (1.10) avec laquelle la section de connexion (1.1) fait saillie dans la section de profilé creux (2.1) pour former sa position de repos (I), et
- la section de connexion (1.1) présente une section d'encliquetage (1.11) adjacente à la section initiale (1.10) et avec l'ondulation (3.20).

5. Dispositif de protection des piétons (10) selon l'une quelconque des revendications précédentes, dans lequel l'appareil d'encliquetage (3) est réalisé de manière à libérer l'ajustement par complémentarité de forme entre le au moins un ergot d'encliquetage (3.1) et la saillie d'encliquetage (3.2) au moyen d'un outil.

6. Dispositif de protection des piétons (10) pour un véhicule, comprenant
- un premier élément de carrosserie (1) monté fixement sur le véhicule, et lequel présente une section de connexion (1.1),
- un second élément de carrosserie (2) réalisé avec une section de profilé creux (2.1), dans lequel la section de connexion (1.1) du premier élément de carrosserie (1) fait saillie dans la section de profilé creux (2.1) et est agencée de manière déplaçable entre une position de repos (I) et une position de collision (II),
- une pièce de fixation extérieure (11) du véhicule, déformable élastiquement, laquelle est reliée au second élément de carrosserie (2), dans lequel la section de profilé creux (2.1) peut être déplacée sur la section de connexion (1.1) de la position de repos (I) à la position de collision (II) à la suite de l'application d'une force (F) sur la pièce de fixation extérieure (11), et
- une connexion conique (4) entre la section de connexion (1.1) et la section de profilé creux (2.1), laquelle est réalisée, lorsque la section de connexion (1.1) est déplacée dans la position de collision (II), pour connecter la section de connexion (1.1) de manière détachable à la section de profilé creux (2.1) par la connexion par friction provoquée par la connexion conique (4).

7. Dispositif de protection des piétons (10) selon la revendication 6, dans lequel, pour former la connexion conique (4)
- la section de connexion (1.1) du premier élément de carrosserie (1) est réalisée de manière effilée et conique en direction de son extrémité, et
- la section de profilé creux (2.1) du second élément de carrosserie (2) est adaptée à la forme conique de la section de connexion (1.1).
